# FASCICULE DE BREVET EUROPEEN

(11) **EP 0 471 094 B1**
(45) Date de publication et mention de la délivrance du brevet: **01.12.1993**
(21) Numéro de dépôt: 90114403.0
(22) Date de dépôt: 27.07.1990
(51) Int. Cl.: A47J 31/40

(54) **Insert adaptable dans un porte-cartouches**
In einem Patronenhalter anpassbarer Einsatz
Insert to be fitted in a cartridge holder

(43) Date de publication de la demande: 19.02.1992
(73) Titulaire: SOCIETE DES PRODUITS NESTLE S.A., 1800 Vevey (CH)
(72) Inventeur: Fond, Olivier, CH-1400 Yverdon (CH); Pasquali, Mario, CH-1337 Vallorbe (CH); Pierre, Bernard, CH-1400 Yverdon (CH)

(56) Documents cités:
- BE-A- 785 821
- FR-A- 1 566 089
- FR-A- 2 556 323

## Description

L'invention concerne un insert adaptable dans un porte-cartouches pour la préparation de boissons dans une machine à café.

L'utilisation de capsules de café, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s'ouvrant sous l'effet de la pression d'eau injectée, répondent plus complètement aux arguments énoncés ci-dessus. Ces capsules se distinguent par leur système d'ouverture.

Celles faisant l'objet du brevet CH 605 293 présentent des zones affaiblies qui se déchirent préférentiellement sous l'effet de la pression. Cette solution présente le désavantage d'augmenter la complexité et le prix de la capsule car les matières employées doivent être traitées de manière très précise pour que l'ouverture soit correcte et reproductible.

La présente invention concerne un insert adaptable dans un porte-cartouches pour l'extraction de capsules sans zone d'affaiblissement.

L'invention concerne un insert adaptable dans un porte-cartouches pour la préparation de boissons dans une machine à café, comprenant un logement de forme sensiblement tronconique avec une bordure inférieure périphérique pour recevoir la cartouche à extraire et sous ce logement un pointeau central fixe.

Par sensiblement tronconique dans la présente description, on entend aussi bien tronconique au sens strict, que tronc d'ellipsoïde, tronc de sphère ou même cylindrique.

La cartouche utilisée est de forme tronconique correspondante au logement de l'insert avec un diamètre compris entre 2,5 et 6 cm et une épaisseur de lit de café comprise entre 10 et 25 mm. Elle est en aluminium ou en plastique avec filtre sur sa face inférieure.

L'intérêt de la présence de la bordure périphérique dans l'insert est de servir d'appui pour la face inférieure de la capsule et de garantir lors de son extraction une bonne position du filtre pour qu'il assure bien sa fonction tout au long de ladite extraction. Cette bordure a normalement une largeur comprise entre 1 et 4 mm. L'extraction de la capsule se fait selon le procédé, objet de la demande de brevet européen déposée par la demanderesse, le même jour que la présente demande, sous le titre "Procédé d'extraction de cartouches fermées et dispositif pour sa mise en oeuvre".

Le pointeau central fixe est un élément de type cylindrique ou cylindro-conique (section circulaire ou ovale), placé sous la capsule, entraînant une concentration de tension locale de la face inférieure et favorisant une ouverture parfaitement maîtrisée de la face inférieure de la capsule. Ce pointeau a un diamètre compris entre 2 et 10 mm et la face supérieure dudit pointeau se situe à une distance de 0 à 5 mm du plan formé par la zone d'appui de la face inférieure de la capsule dans l'insert.

L'insert comporte sous le logement des ailettes radiales entourant le pointeau central fixe. Elles sont au nombre de 3 à 8, leur épaisseur varie de 0,5 à 2 mm et leur forme est légèrement arrondie pour ne pas déchirer la face inférieure de la cartouche à extraire. De manière à assurer un bon écoulement de l'extrait de café, l'arête supérieure des ailettes radiales fait un angle avec l'horizontale compris entre 5 et 20°. La définition exacte de cet angle sera donnée en référence aux figures. La fonction de ces ailettes est d'assurer un appui complémentaire du filtre tout en permettant une bonne évacuation de l'extrait de café par l'ouverture créée dans la face inférieure de la coupelle.

Cet insert est un élément interchangeable qui s'adapte dans un porte-cartouches classique de machine à café. Le logement intérieur est dimensionné selon le type de cartouche à extraire.

On dispose ainsi de différents inserts permettant d'employer différentes capsules de différentes tailles avec la même machine à café et le même porte-cartouches. Cet insert n'est concevable que parce qu'on a également un dispositif d'extraction qui est polyvalent, permettant d'extraire dans de bonnes conditions différentes capsules. Ce dispositif fait l'objet d'une demande de brevet européen déposée par la demanderesse, le même jour que la présente demande, sous le titre "Dispositif d'extraction de cartouches fermées". L'extraction se fait normalement à une pression comprise entre 2 et 20 bars.

Cet insert a un diamètre compris entre 30 et 70 mm et une hauteur comprise entre 10 et 30 mm. Il est normalement en métal, mais peut également être partiellement ou totalement en plastique.

L'étanchéité du dispositif est garantie du fait de l'écrasement de la bordure de la capsule entre le rebord supérieur de l'insert et le dispositif d'extraction.

La suite de la description est faite en référence aux dessins sur lesquels:
Fig. 1 est une coupe de l'insert selon l'invention,
Fig. 2 est une vue de dessus de la Fig. 1,
Fig. 3,4 et 5 sont des coupes de différents inserts dans un système d'extraction.

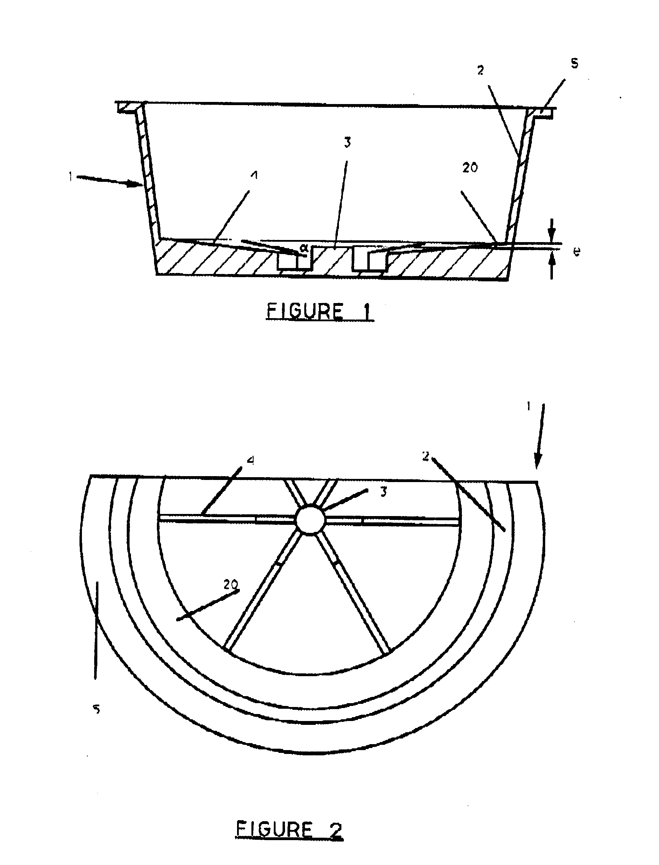

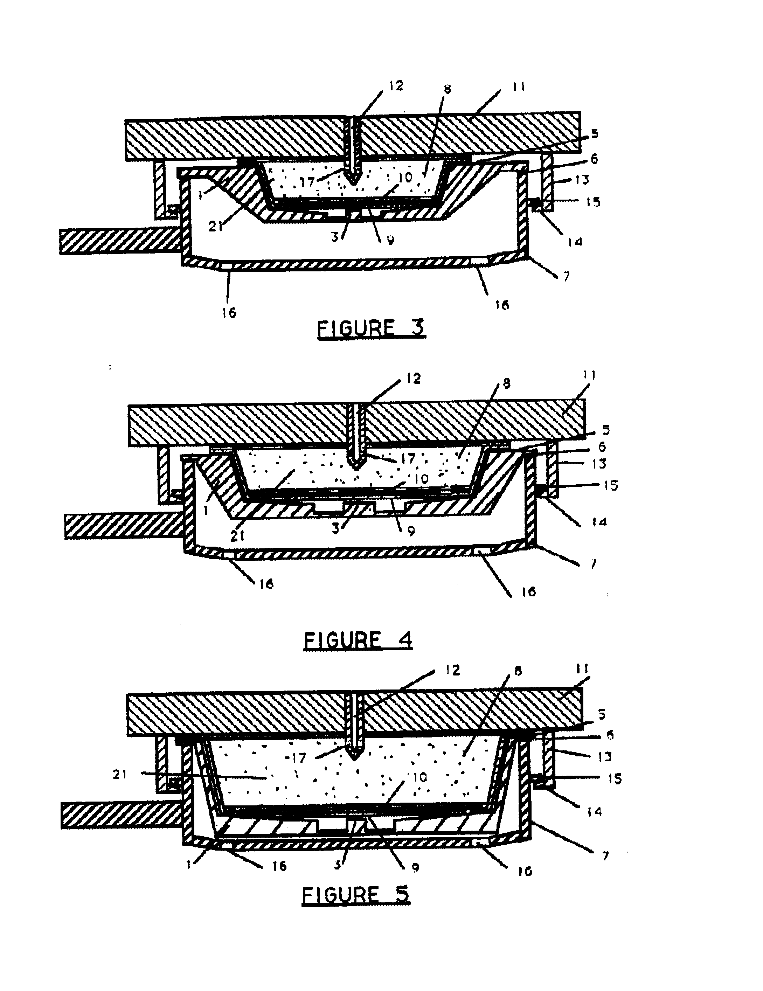

L'insert (1) comporte un logement (2) pour la cartouche et sous ce logement un pointeau central (3) et six ailettes radiales (4) et un rebord supérieur (5) qui repose, lors de l'extraction sur une bordure correspondante (6) du porte-cartouches (7). Le fond du logement (2) comporte une bordure (20) sur laquelle repose la paroi inférieure de la capsule à extraire. Cette bordure (20) est distante de e de la face supérieure du pointeau (3). Cette distance e est comprise entre 0 et 5 mm. Les ailettes (4) font un angle a avec l'horizontale. Cet angle est compris entre 5 et 20°. Les Fig. 3 à 5 montrent trois inserts différents avec lesquels on extrait des cartouches (8) de dimensions différentes contenant le café (21). Les cartouches comportent des faces inférieures (9) et des filtres (10) qui appuient sur la bordure (20).

Le système d'extraction (11) comporte un organe d'injection d'eau (12) et une cage de fixation (13) avec rampes de serrage (14). Le porte-cartouches (7) comporte deux pattes de serrage (15) venant se loger sur les rampes (14) et des orifices (16) pour la réception du café après extraction de la cartouche (8). Le fonctionnement du dispositif est le suivant:

On place la cartouche (8) dans l'insert (1) qu'on place dans le porte-cartouches (7). Le porte-cartouches est ensuite engagé sur la cage de fixation (13) et l'organe d'injection d'eau (12) perce la paroi supérieure de la cartouche (8).

L'eau arrive par les orifices (17) de l'organe d'injection d'eau et mouille tout le lit de café. Sous l'effet de la pression d'eau la face inférieure (9) de la cartouche se déforme et vient appuyer contre le pointeau central (3). La face inférieure se déchire lorsqu'elle atteint sa tension de rupture. Le filtre (10) se déforme également, mais il a une épaisseur telle qu'il ne se déchire pas. L'extraction proprement dite peut alors commencer. Le liquide s'écoule à travers les orifices (16) et la pression augmente dans la capsule. On recueille la boisson dans un récipient (non représenté). On arrive à extraire une cartouche en un laps de temps réduit et on obtient une boisson ayant toutes les caractéristiques d'un café espresso.

## Revendications

1. Insert adaptable dans un porte-cartouches pour la préparation de boisson dans une machine à café, caractérisé en ce qu'il comprend un logement de forme sensiblement tronconique avec une bordure inférieure périphérique pour recevoir la cartouche à extraire et sous ce logement un pointeau central fixe.

2. Insert selon la revendication 1, caractérisé en ce qu'il comprend en outre des ailettes radiales entourant le pointeau central fixe.

3. Insert selon la revendication 1, caractérisé en ce que le pointeau central fixe a une section circulaire ou ovale et un diamètre compris entre 2 et 10 mm.

4. Insert selon la revendication 3, caractérisé en ce que la face supérieure du pointeau se situe à une distance de 0 à 5 mm du plan formé par la zone d'appui de la face inférieure de la capsule dans ledit insert.

5. Insert selon l'une des revendications 1 à 4, caractérisé en ce qu'il comporte entre 3 et 8 ailettes radiales.

6. Insert selon la revendication 5, caractérisé en ce que chaque ailette a une épaisseur comprise entre 0,5 et 2 mm.

7. Insert selon l'une des revendications 1 à 6, caractérisé en ce que l'arête supérieure des ailettes radiales font un angle avec l'horizontale compris entre 5 et 20°.

8. Insert selon l'une des revendications 1 à 7, caractérisé en ce qu'il a un diamètre compris entre 30 et 70 mm et une hauteur comprise entre 10 et 30 mm.

9. Insert selon l'une des revendications 1 à 8, caractérisé en ce que la bordure inférieure périphérique a une largeur comprise entre 1 et 4 mm.

## Patentansprüche

1. In einen Portionspackungsträger ein paßbarer Einsatz für die Getränkeherstellung in einer Kaffeemaschine, dadurch gekennzeichnet, daß er eine im wesentlichen kegelstumpfförmige Aussparung mit einem unteren Umfangsrand zur Aufnahme der zu extrahierenden Portionspackung und unter dieser Kammer einen feststehenden zentrale Stift aufweist.

2. Einsatz nach Anspruch 1, dadurch gekennzeichnet, daß er außerdem radiale Schenkel aufweist, die den feststehenden zentralen Stift umgeben.

3. Einsatz nach Anspruch 1, dadurch gekennzeichnet, daß der feststehende zentrale Stift einen kreisförmigen oder ovalen Querschnitt und einen Durchmesser von 2 bis 10 mm hat.

4. Einsatz nach Anspruch 3, dadurch gekennzeichnet, daß die Oberseite des Stifts in einem Abstand von 0 bis 5 mm von der Ebene angeordnet ist, in der die Auflagezone der Unterseite der Portionspackung in diesem Einsatz liegt.

5. Einsatz nach einem der Ansprüchen 1 bis 4, dadurch gekennzeichnet, daß er drei bis acht radiale Schenkel besitzt.

6. Einsatz nach Anspruch 5, dadurch gekennzeichnet, daß jeder Schenkel eine Dicke von 0,5 bis 2 mm hat.

7. Einsatz nach einem der Ansprüche 1 bis 6, dadurch gekennzeichnet, daß die Oberkante der radialen Schenkel mit der Horizontalen einen Winkel von 5 bis 20° bildet.

8. Einsatz nach einem der Ansprüche 1 bis 7, dadurch gekennzeichnet, daß er einen Durchmesser von 30 bis 70 mm und eine Höhe von 10 bis 30 mm hat.

9. Einsatz nach einem der Ansprüche 1 bis 8, dadurch gekennzeichnet, daß der untere Umfangsrand eine Breite von 1 bis 4 mm hat.

## Claims

1. An adapatable insert for a cartridge holder for the preparation of beverages in a coffee machine, characterized in that it comprises a substantially frustoconical recess with a lower peripheral rim for receiving the cartridge to be extracted and, beneath this recess, a fixed central finger.

2. An insert as claimed in claim 1, characterized in that it also comprises radial fins surrounding the fixed central finger.

3. An insert as claimed in claim 1, characterized in that the fixed central finger has a circular or oval cross- section and a diameter of 2 to 10 mm.

4. An insert as claimed in claim 3, characterized in that the upper face of the finger is situated at a distance of 0 to 5 mm from the plane formed by the zone supporting the lower face of the capsule in the insert.

5. An insert as claimed in any of claims 1 to 4, characterized in that it comprises between 3 and 8 radial fins.

6. A process as claimed in claim 5, characterized in that each fin has a thickness of 0.5 to 2 mm.

7. An insert as claimed in any of claims 1 to 6, characterized in that the upper edge of the radial fins forms an angle of 5 to 20° with the horizontal.

8. An insert as claimed in any of claims 1 to 7, characterized in that it has a diameter of 30 to 70 mm and a height of 10 to 30 mm.

9. An insert as claimed in any of claims 1 to 8, characterized in that the inner peripheral rim has a width of 1 to 4 mm.
